**Europäisches Patentamt**

**European Patent Office**

**Office européen des brevets**

(19)

(11) Veröffentlichungsnummer : **0 390 068 B1**

(12)

# EUROPÄISCHE PATENTSCHRIFT

(45) Veröffentlichungstag der Patentschrift :
**11.11.92 Patentblatt 92/46**

(51) Int. Cl.⁵ : **B29C 45/17**

(21) Anmeldenummer : **90105800.8**

(22) Anmeldetag : **27.03.90**

(54) **Gasverschlussventil und Verfahren zum Steuern einer mit einem solchen Gasverschlussventil versehenen Kunststoffverarbeitungsanlage.**

(30) Priorität : **28.03.89 DE 3910025**

(43) Veröffentlichungstag der Anmeldung :
**03.10.90 Patentblatt 90/40**

(45) Bekanntmachung des Hinweises auf die Patenterteilung :
**11.11.92 Patentblatt 92/46**

(84) Benannte Vertragsstaaten :
**AT BE CH DE DK ES FR GB IT LI NL SE**

(56) Entgegenhaltungen :
**DE-A- 2 716 817**

(56) Entgegenhaltungen :
**FR-A- 1 096 143**
**GB-A- 2 139 548**
**US-A- 2 940 123**
**US-A- 4 781 554**

(73) Patentinhaber : **Krauss-Maffei Aktiengesellschaft**
**Krauss-Maffei-Strasse 2**
**W-8000 München 50 (DE)**

(72) Erfinder : **Herzog, Kurt**
**Sennrütistrasse 7**
**CH-9113 Degersheim (CH)**
Erfinder : **Klotz, Bernd, Dipl.-Ing. (FH)**
**Waldstrasse 3**
**W-8066 Günding (DE)**

EP 0 390 068 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Gasverschlußventil sowie auf ein Verfahren zum Steuern einer mit einem solchen Gasverschlußventil versehenen Kunststoffverarbeitungsanlage.

Zur Herstellung von Kunststoffspritzlingen mit abgeschlossenem Hohlraum ist es aus der GB-2 139 548 A bekannt, den Formhohlraum des Werkzeugs nur soweit mit plastifiziertem Kunststoffmaterial zu füllen, daß seine Wände in einer gewünschten Materialstärke bedeckt sind. Hierzu wird durch Injizieren von Gas mit Drucken bis zu 1000 bar und mehr eine Gasblase in dem teilweise gefüllten Formhohlraum gebildet, welche das eingefüllte Kunststoffmaterial allseitig gegen die Wände des Formhohlraumes preßt. Sobald das Kunststoffmaterial an den Wänden "steht", wird das injizierte Gas in das Druckreservoir zurückgeführt, um Gas zu sparen und eine Gasverunreinigungen der Umgebung zu vermeiden. Nach erfolgter Gasrückführung wird zum Versiegeln des Spritzlings dessen Öffnung durch Zufuhr von plastifiziertem Kunststoffmaterial verschlossen.

Aus der US-4 781 554 ist es ferner bekannt, zur dosierten Injektion von plastifiziertem Kunststoffmaterial vor den Extruderkopf einer Kunststoffspritzgießmaschine einen Dosierkopf mit einer Nadelverschlußdüse am Austritt in den Formhohlraum des Werkzeugs zu setzen. Für die zusätzliche Gasinjektion ist die Verschlußnadel der Nadelverschlußdüse mit einem axial verlaufenden Gaskanal versehen, der über ein außenliegendes Gasverschlußventil an das Gasreservoir angeschlossen ist. In einen solchen Gaskanal kann jedoch bei abgeschaltetem Gasstrom plastifiziertes Kunststoffmaterial eindringen, das beim Öffnen des Gasverschlußventils in den Formenhohlraum geschleudert wird und zur Bildung von Schlieren im fertigen Spritzling führt. Des weiteren muß die axial gebohrte Verschlußnadel jedesmal gegen eine Verschlußnadel ohne Axialbohrung ausgetauscht werden, wenn die Spritzgießmaschine für die Produktion von Spritzlingen mit Vollfüllung (also ohne Gasinjektion) verwendet werden soll.

Die **Aufgabe** der Erfindung besteht demgegenüber darin, ein Gasverschlußventil der eingangs erwähnten Art zu schaffen, welches auch bei sehr hohen Gasdrucken im Bereich von 1000 bar eine Schlierenbildung sicher vermeidet und bei einer Produktionsumstellung auf Spritzlinge mit Vollfüllung keine Umrüstung erfordert.

Diese Aufgabe wird erfindungsgemäß durch die Merkmale des Patentanspruchs 1 gelöst.

Verfahrenstechnische Anwendungen des erfindungsgemäßen Gasverschlußventils zur Steuerung von Kunststoffverarbeitungsanlagen sind in den Ansprüchen 2 und 3 angegeben.

Der Erfindungsgedanke beruht darauf, eine baulich einfache Verschlußmöglichkeit für den erwähnten axialen Gasführungskanal der Verschlußnadel anzugeben, welche selbst bei extrem hohen Drucken im Bereich von 1000 bar sicher arbeitet. Das erfindungsgemäße Gasverschlußventil kann sowohl in die Verschlußnadel des Dosierkopfes einer Kunststoffspritzgießmaschine als auch in das Spritzgießwerkzeug eingebaut werden.

Die Erfindung wird nachstehend an Hand eines prinzipiellen Ausführungsbeispiels in den Zeichnungen näher erläutert. Es zeigt:

Fig. 1 eine schematische Darstellung einer Kunststoffverarbeitungsanlage, welche mit dem erfindungsgemäßen Gasverschlußventil in zwei alternativen Einbaulagen versehen ist;

Fig. 2 einen Längsschnitt durch ein erfindungsgemäßes Gasverschlußventil im geöffneten Betriebszustand, und

Fig. 3 einen Längsschnitt durch das Gasverschlußventil nach Fig. 2 im geschlossenen Betriebszustand.

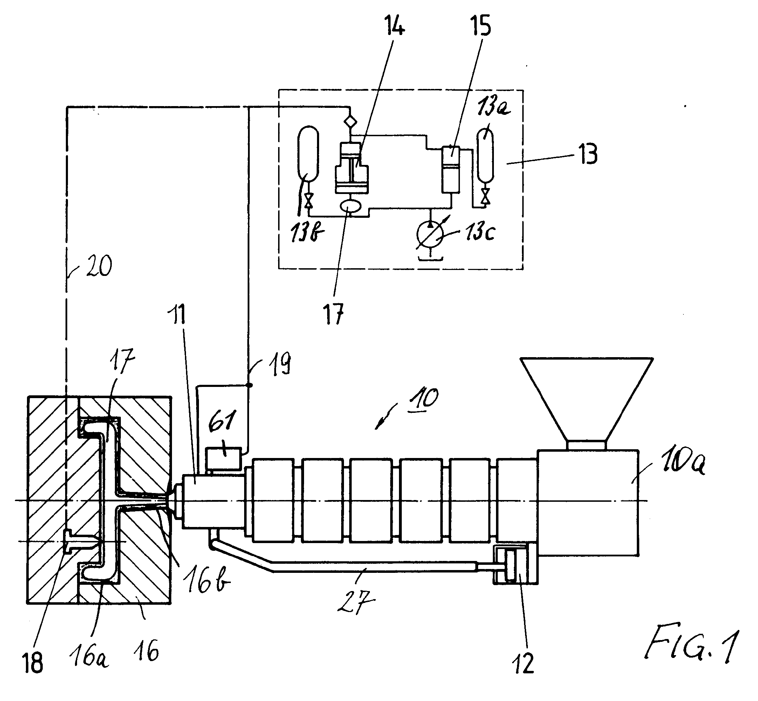

Die in Fig. 1 mit **10** bezeichnete Kunststoffverarbeitungsanlage umfaßt eine Kunststoffspritzgießmaschine **10a**, ein zweiteiliges Werkzeug **16** und ein Gasdrucksystem **13** mit Gastanks **13a, 13b** für ein inertes Druckgas, z.B. Stickstoff, das unter hohen Druck von bis zu 1000 bar und mehr stehen kann. An ihrem Austrittsende weist die Spritzgießmaschine **10a** einen Dosierkopf **11** auf, der über eine hydraulische Antriebsvorrichtung **12** gesteuert wird.

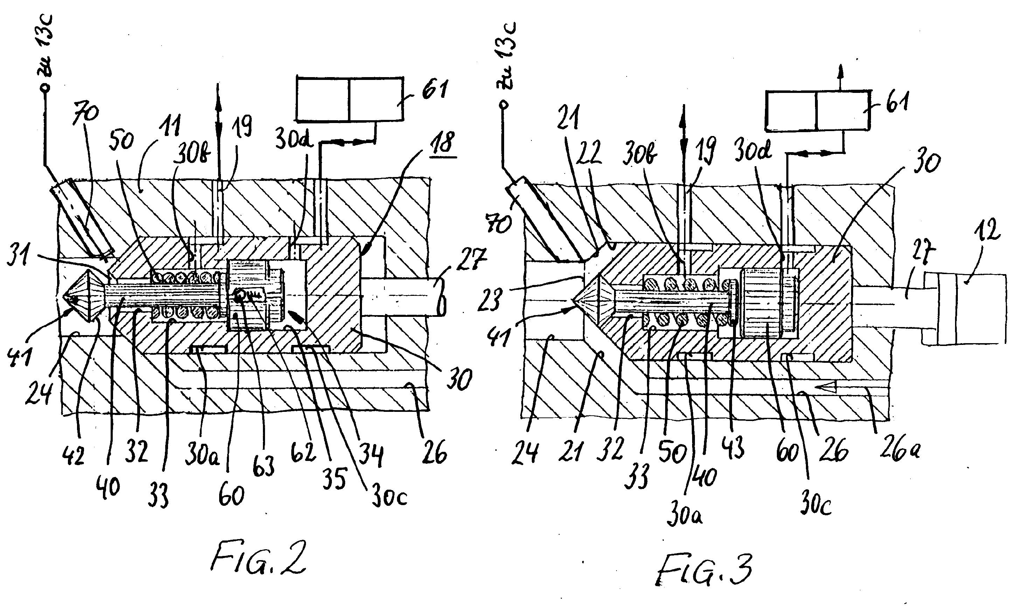

Die Gastanks **13a, 13b** sind mit Druckspeichern **14, 15** verbunden, die von einer Pumpe **13c** mit verstellbarem Volumen geladen werden. In dem Druckladekreis befindet sich ein Proportionalventil **17**, welches über einen Massedruckaufnehmer **70** (Fig. 2) eine vom Druck der austretenden Kunststoffmasse abhängige Steuerung des Gasdrucks in den alternativ vorgesehenen Gaszuführungen **19, 20** ermöglicht. Die Gaszuführungen **19, 20** führen zu einem in Fign. 2 und 3 näher dargestellten Gasverschlußventil **18**, welches in dem Dosierkopf **11** oder in dem Werkzeug **16** eingebaut ist. Bei Einbau in das Werkzeug **16** mündet das Gasverschlußventil **18**, wie Fig. 1 zeigt, direkt in den Formhohlraum **16a** des Werkzeugs **16**. Der Dosierkopf **11** und damit das dort eingebaute Gasverschlußventil **18** münden in einen Angußkanal **16b** des Werkzeugs **16**.

Bei der prinzipiellen Ausführungsform nach den Fign. 2 und 3 bildet das Gasverschlußventil **18** mit seinem Ventilgehäuse **30** die reversierende Verschlußnadel einer Nadelverschlußdüse des Dosierkopfes **11**. Hierzu ist das im übrigen zylindrische Ventilgehäuse **30** an seinem vorderen Ende konisch zugespitzt, um mit einer entsprechenden Kegelfläche **21** der im übrigen zylindrischen Dosierkopfbohrung **22** an deren Übergang **23** in die zylindrische Austrittsmündung **24** einen dicht schließenden Ventilsitz für plastifiziertes Kunststoffmaterial zu bilden. Das plastifizierte Kunststoffmaterial wird der Dosierkopfbohrung 22 über einen Kanal 26 von dem Extruder der Kunststoffspritzgießmaschine 10a in Richtung des Pfeils 26a zugeführt. Die zylindrische Austrittsmündung 24 geht fluchtend in den Angußkanal 16b des Werkzeugs 16 (Fig. 1) über. Das Ventilgehäuse 30 wird über ein Gestänge 27 von der hydraulischen Antriebsvorrichtung 12 innerhalb der Dosierkopfbohrung 22 in axialer Richtung vor- und zurückbewegt.

Der Druck des plastifizierten Kunststoffs wird im Bereich des Übergangs 23 mit Hilfe des Massedruckaufnehmers 70 gemessen, dessen Drucksignal - wie erwähnt - dem Proportionalventil 17 (Fig. 1) zur massedruckabhängigen Steuerung des Gasdrucks zugeführt wird.

Die reversierende Bewegung des Gasverschlußventils 18 in der Dosierkopfbohrung 22 erfolgt über das nur schematisch angedeutete Gestänge 27 der hydraulischen Antriebsvorrichtung 12.

Zur Verbindung des reversierenden Gasverschlußventils 18 mit der Gaszuführung 19 weist das Ventilgehäuse 30 an seiner zylindrischen Außenfläche eine erste Ringnut 30a auf, deren Länge dem Hub des Gasverschlußventils 18 in der Dosierkopfbohrung 22 entspricht, so daß in jeder Stellung des Gasverschlußventils 18 eine Verbindung zwischen der Gaszuführung 19 und einem radialen Kanal 30b innerhalb des Ventilsgehäuses 30 besteht, wie aus den beiden Extremstellungen des Ventilgehäuses 30 gemäß Fign. 2 und 3 ersichtlich ist.

Das Ventilgehäuse 30 des Gasverschlußventils 18 weist eine mehrstufige, axiale Sackbohrung auf, wobei der Bohrungsdurchmesser am Sackboden am größten und an der Bohrungsmündung im Bereich des konisch zugespitzten vorderen Endes des Ventilgehäuses 30 am kleinsten ist. Infolge der Abstufung des Bohrungsdurchmessers ergeben sich innerhalb des Ventilgehäuses 30 drei zylindrische Kammern, nämlich eine vordere Kammer 32, eine mittlere Kammer 33 und eine hintere Kammer 35.

In die hintere Kammer 35 mündet ein Arbeitsgasspeicher 61, welcher von der Gaszuführung 19 in noch näher zu erläuternder Weise gespeist wird. Um in jeder Stellung des Gasverschlußventils 18 eine Verbindung zwischen dem Arbeitsgasspeicher 61 und der hinteren Kammer 35 zu schaffen, weist das Ventilgehäuse 30 an seiner zylindrischen Außenfläche eine zweite Ringnut 30c auf, deren Länge wiederum dem Hub des Gasverschlußventils 18 entspricht. Die zweite Ringnut 30c ist über einen Verbindungskanal 30d mit der hinteren Kammer 35 verbunden.

In der hinteren Kammer 35 ist ein Steuerkolben 60 frei beweglich gelagert, derart, daß der Verbindungskanal 30d auf der Rückseite des Steuerkolbens 60 in die hintere Kammer 35 mündet. Um auch in der hinteren Endstellung des Steuerkolbens 60 gemäß Fig. 3 eine auf die hintere Steuerkolbenfläche einwirkende Druckkraft zu gewährleisten, weist der Steuerkolben 60 an seiner Rückseite eine Eindrehung auf, deren Schulter bündig mit der Vorderkante des Verbindungskanals 30d abschließt. Der Steuerkolben 60 verschließt das in der hinteren Kammer 35 und dem Arbeitsgasspeicher 61 befindliche Arbeitsgasvolumen 34 gegen das Gasdrucksystem 13, welches infolge der Einmündung des Verbindungskanals 30b in die mittlere Kammer 33 eine auf die vordere Steuerkolbenfläche wirkende Druckkraft entgegen der Druckkraft des Arbeitsgasvolumens 34 erzeugt. Der Steuerkolben 60 dichtet jedoch nicht vollständig das Arbeitsgasvolumen 34 von dem Gasdrucksystem 13 ab; vielmehr weist der Steuerkolben 60 zum Ventilgehäuse 30 einen nicht gezeigten, definierten Spalt auf, um eine definierte Leckage zwischen den Kammern 33 und 35 zu schaffen. Des weiteren ist im Zentrum des Steuerkolbens 60 eine eine Bohrung 62 vorgesehen, in welcher sich ein Rückschlagventil 63 befindet, so daß der Gasdruck vor und hinter dem Steuerkolben 60 im statischen Zustand gleich ist.

In der vorderen und in der mittleren Kammer 32 bzw. 33 erstreckt sich eine Ventilnadel 40, deren doppelkegeliger Kopf 41 mit seiner hinteren Kegelfläche 42 einen massedichten Ventilsitz mit der kegelig geweiteten Mündung 31 der vorderen Kammer 32 bildet. Bei geschlossenem Ventilsitz gemäß Fig. 3 bildet die vordere Kegelfläche des Ventilnadelkopfes 41 mit dem konisch zugespitzten vorderen Ende des Ventilkörpers 30 einen durchgehenden, geschlossenen Kreiskegel. In dieser Stellung sind die Kammern 32, 33, 35 und damit auch das Gasdrucksystem 13 zuverlässig gegen das Eindringen von plastifizierter Kunststoffmasse abgedichtet, welche über den Kanal 26 durch den geöffneten Ventilsitz zwischen dem Gehäuse des Dosierkopfes 11 und dem zurückgezogenen Ventilkörper 30 in den Angußkanal 16b des Formhohlraums 16a fließen kann.

In der mittleren Kammer 33 befindet sich eine Druckfeder 50, welche den Schaft der Ventilnadel 40 umgibt und sich einerseits gegen die Schaulter am Übergang der Kammern 32, 33 und andererseits eine am hinteren Ende der Ventilnadel 40 angebrachte Druckplatte 43 abstützt. Die Druckfeder 50 spannt die Ventilnadel 40 in Schließrichtung vor, so daß die Ventilnadel 40 nur öffnet, wenn

a) bei Gaszufuhr der auf der Rückseite der Druckplatte 43 wirkende Gasdruck des Gasdrucksystems 13 größer ist als die Summe aus Massedruck am Ventilnadelkopf 41 und Federvorspannung (bei einer Stellung des Steuerkolbens 60, in welcher der Steuer-Steuerkolben 60 nicht gegen die Druckplatte 43 anliegt),

oder

b) bei Gasrückführung der Steuerkolben 60 einem so großen Differenzdruck ausgesetzt ist, daß er sich gegen die Druckplatte 43 bewegt und die Ventilnadel 40 gegen die Federvorspannung und den Druck der Kunststoffmasse am Ventilnadelkopf 41 verschiebt.

Die vorgenannten alternativen Möglichkeiten a) und b) für die Öffnung der Ventilnadel **40** sollen im folgenden näher betrachtet werden:

Bei Gaszufuhr (Möglichkeit a)) gelangt das Druckgas von der Gaszuführung **19** über die Kammern **33** und **35** und die geöffnete Ventilnadel **40** (Fig. 2) in das Zentrum der in den Formhohlraum **16a** zuvor eingebrachten, plastifizierten Kunststoffmasse, wobei die Massezufuhr im Zeitpunkt der Gaszufuhr durch den geschlossenen Ventilsitz zwischen Ventilkörper **30** und der Kegelfläche **21** der Dosierkopfbohrung **22** unterbrochen ist. Infolge der Gaszufuhr bildet sich im Formhohlraum **16a** eine Gasblase **17** aus (Fig. 1), welche die eingefüllte Kunststoffmasse gleichmäßig und allseitig gegen die Wände des Formhohlraums **16a** preßt. Gleichzeitig gelangt bei der Gaszufuhr das Druckgas über die Bohrung **62** entgegen der Rückstellkraft des Rückschlagventils **63** und den definierten Spalt zwischen Kolben **60** und Gehäuse **30** in die hintere Kammer **35** und von dort in den Arbeitsspeicher **61**. Dabei ist der Druck vor und hinter dem Steuerkolben **60** gleich groß.

Nach Beendigung der Gaszufuhr wird das in der Gasblase **17** gesammelte Druckgas in das Gasdrucksystem **13** zurückgeführt. Dazu wird das Gasdrucksystem **13** entlüftet, wodurch zunächst die Ventilnadel **40** von der nunmehr überwiegenden Vorspannung der Druckfeder **50** in Schließstellung bewegt wird. Anschließend wird der Steuerkolben **60** infolge des höheren Drucks auf seiner Rückseite (Arbeitsgasvolumen **34**) gegen die Ventilnadel **40** bewegt und öffnet wieder die Ventilnadel **40**. Damit kann nun das Gas aus der Gasblase **17** in das Gasdrucksystem **13** abströmen. Da ferner das Gas aus dem Arbeitsgasvolumen **34** nur über den definierten Spalt zwischen Steuerkolben **60** und Ventilgehäuse **30** in das Gasdrucksystem **13** abströmen kann, wenn eine Druckdifferenz zur Gaszuführung **19** vorhanden ist, bleibt der Steuerkolben **60** so lange in seiner die Ventilnadel **40** öffnenden Stellung, solange Gas in der Gasblase **17** vorhanden ist. Dies bedeutet, daß die Ventilnadel **40** geöffnet bleibt, bis das Gas vollständig aus dem Werkzeug **16** in das Gasdrucksystem **13** bzw. die Druckspeicher **14, 15** zurückgeführt ist. Im Anschluß daran wird der Arbeitsgasspeicher **61** über sein Entlüftungsventil zur Umgebung entlüftet, falls noch ein Restdruck vorhanden ist. Damit ist das Gasverschlußventil **18** wieder in seiner Ausgangsposition; die nächste Werzeugfüllung kann dann durch Zurückziehen des Gasverschlußventils **18** in die Position gemäß Fig. 3 eingeleitet werden.

**Patentansprüche**

1.  Gasverschlußventil für eine aus einer Kunststoffspritzgießmaschine und einem Spritzgießwerkzeug aufgebauten Kunststoffverarbeitungsanlage, mit folgenden Merkmalen:

    (a) Ein Ventilgehäuse (30), welches ortsfest in das Werkzeug (16) eingebaut ist oder eine bewegliche Verschlußnadel einer im Kopf (11) der Kunststoffspritzgießmaschine (10a) eingebauten Nadelverschlußdüse bildet;

    (b) einer im Ventilgehäuse (30) beweglich gelagerten, unter Federvorspannung stehenden Ventilnadel (40), welche mit dem Ventilgehäuse (30) einen Ventilsitz bildet, der bei geschlossener Ventilnadel (40) massedicht gegen eine von außen anliegende, plastifizierte und gegebenenfalls unter Druck stehende Kunststoffmasse abdichtet,

    (c) einen im Ventilgehäuse (30) in axialer Verlängerung der Ventilnadel (40) frei beweglich gelagerten Steuerkolben (60), welcher ein Arbeitsvolumen (34) unter Bildung einer definierten Leckage gegenüber einem Gasdrucksystem (13) verschließt, welches einen Gasdruckerzeuger- und -speicherteil (13a , 13b, 13c), eine Gaszuführung (19,20) zum Kopf (11) der Spritzgießmaschine (10a) und/oder zum Werkzeug (16) sowie eine, in das teilweise gefüllte Werkzeug (16) injizierte Gasblase (17) umfaßt, wobei der Durchmesser des Steuerkolbens (60) größer ist als der Durchmesser der Ventilnadel (40), auf deren axiales Ende der Gasdruck des Gasdrucksystems (13) in der Gasinjektionsphase im öffnenden Sinne gegen den Druck der plastifizierten Kunststoffmasse und die Federvorspannung einwirkt, und wobei der Steuerkolben (60) bei der Gasrückführung der Gasblase (17) zu dem Gasdrucksystem (13) auf das axiale Ende der Ventilnadel (40) im öffnenden Sinne gegen den Druck der injizierten Gasblase (17) im Werkzeug (16) und die Federvorspannung einwirkt.

2.  Verfahren zum Steuern einer mit einem Gasverschlußventil nach Anspruch 1 versehenen Kunststoffverarbeitungsanlage, welche eine Kunststoffspritzgießmaschine (10a), ein Spritzgießwerkzeug (16) und ein Gasdrucksystem (13) für ein inertes Druckgas umfaßt, wobei das Gasdrucksystem (13) mit dem Gasverschlußventil (18) verbunden ist, welches in einem Dosierkopf (11) der Kunststoffspritzgießmaschine (10a) oder in dem Spritzgießwerkzeug (16) eingebaut ist und direkt in den Formenhohlraum (16a) des Spritzgießwerkzeugs (16) beziehungsweise indirekt (über den Dosierkopf) in einen Angußkanal (16b) des Spritzgießwerkzeugs (16) mündet, bei dem durch Öffnen des Ventilsitzes des Gasverschlußventils (18) Druckgas in den teilweise mit plastifiziertem Kunststoff gefüllten Formenhohlraum (16) unter Bildung einer Gasblase (17) injiziert wird, welche das eingefüllte Kunststoffmaterial allseitig gegen die Wände des Formenhohlraums (16) preßt, bei dem durch Verschließen des Ventilsitzes des Gasverschlußventils (18) das injizierte Druckgas solange in dem Formenhohlraum (16) gehalten wird, bis sich das Kunststoffmaterial an den Wänden des Formenhohlraums (16) soweit verfestigt hat, daß es nicht mehr fließt, und

bei dem anschließend durch erneutes Öffnen des Ventilsitzes des Gasverschlußventils (18) das injizierte Druckgas in das Gasdrucksystem (13) rückgeführt wird,

**dadurch gekennzeichnet**, daß das auf den frei beweglichen Steuerkolben (60) des Gasverschlußventils (18) einwirkende, mit dem Gasdrucksystem (13) in Verbindung stehende Arbeitsvolumen (34) des Ventilgehäuses (30) in einem definierten Zeitabschnitt nach Beendigung der Gasrückführung entlüftet wird, um den Steuerkolben (60) und die von dem Steuerkolben (60) gesteuerte Ventilnadel (40) schneller in deren Ausgangsstellung zurückzustellen, in welcher der Ventilsitz des Gasverschlußventils (18) geschlossen ist.

3. Verfahren nach Anspruch 2, **dadurch gekennzeichnet**, daß nach Entlüftung des Arbeitsvolumens (34) die Öffnung des die Gasblase (17) umschließenden Formlings durch Einfüllen einer de-finierten Menge von plastifizierter Kunststoff-masse verschlossen wird (" Angußversiege-lung ").

**Claims**

1. A gas closure valve for a synthetic plastics processing plant comprising a plastics injection moulding machine and an injection moulding tool, with the following features:

   (a) a valve housing (30) which is rigidly mounted into the tool (16) or which forms a movable occluding needle of a needle occluding jet built into the head (11) of the synthetic plastics injection moulding machine (10a);

   (b) mounted for movement in the valve housing (30) and subject to initial spring tension, a valve needle (40) which, together with the valve housing (30), forms a valve seat which, when the valve needle (40) is closed, provides a tight seal against a plasticised and possibly pressurised synthetic plastics composition which is applied from without;

   (c) a control piston (60) mounted for free movement in the valve housing (30) in an axial extension of the valve needle (40) and which seals off a working space (34), forming a clearly defined leakage in respect of a pressurised gas system (13) which comprises a gas pressure generating and storage part (13a, 13b 13c), a gas supply (19, 20) to the head (11) of the injection moulding machine (10a) and/or to the tool (16) and also a gas-filled sac (17) injected into the partially filled tool (16), the diameter of the control piston (60) being greater than the diameter of the valve needle (40) on the axial end of which the gas pressure of the gas pressure system (13) acts in the gas injection phase in opening direction against the pressure of the plasticised synthetic plastics composition and the initial spring tension, and in which the control piston (60) during the return of gas to the gas-filled sac (17) acts on the axial end of the valve needle (40) in the opening direction, against the pressure of the injected gas-filled sac (17) in the tool (16) and the initial spring tension.

2. A method of controlling a synthetic plastics processing plant provided with a gas closure valve according to claim 1 and which comprises a synthetic plastics injection moulding machine (10a), an injection moulding tool (16) and a gas pressure system (13) for an inert pressurised gas, the gas pressure system (13) being connected to the gas closure valve (18) which is incorporated into a dispensing head (11) of the synthetic plastics injection moulding machine (10a) or in the injection moulding tool (16) and which discharges directly into the mould cavity (16a) of the injection moulding tool (16) or alternatively indirectly (via the dispensing head) into a runner (16b) in the injection moulding tool (16), in which by opening the valve seat of the gas closure valve (18), pressurised gas is injected into the mould cavity (16) which is partially filled with plasticised plastics material, forming a gas-filled sac (17) which presses the filled-in synthetic plastics material against the surrounding walls of the mould cavity (16), and in which by closing the valve seat of the gas closure valve (18) the injected pressurised gas is maintained in the mould cavity (16) until such time as the synthetic plastics material has become sufficiently solidified on the walls of the mould cavity (16) that it is no longer flowable and in which then, by again opening the valve seat of the gas closure valve (18), the injected pressurised gas is returned to the pressurised gas system (13), characterised in that the working space (34) of the valve housing (30), acting on the freely movable control piston (60) of the gas closure valve (18) and communicating with the gas pressure system (13) is upon conclusion of gas return vented over a clearly defined period of time in order to restore the control piston (60) and the valve needle (40) which is controlled by the control piston (60) more rapidly into their starting position in which the valve seat of the gas closure valve (18) is closed.

3. A method according to claim 2, characterised in that after venting of the working space (34), the aperture of the moulding enclosing the gas filled sac (17) is occluded by being filled with a clearly defined quantity of plasticised synthetic plastics composition ("runner sealing").

**Revendications**

1. Valve d'obturation de circuit de gaz destinée à une installation de transformation de matière plastique, constituée par une machine de moulage par injection de matière plastique et par un outil de moulage par injection comportant les caractéristiques suivantes :

   (a) la valve comporte un corps (30) qui est incorporé de façon fixe dans l'outil (16), ou qui forme une aiguille d'obturation mobile d'une buse d'obturation à aiguille, incorporée dans la tête (11) de la machine (10a) de moulage par injection de matière plastique ;

   (b) une aiguille (40) de valve est installée de façon mobile dans le corps (30) et est placée sous la contrainte préalable d'un ressort, qui forme avec le corps (30) de valve un siège de valve qui, lorsque l'aiguille (40) de valve est en position de fermeture, réalise une étanchéité à l'encontre d'une masse de matière plastique appliquée de l'extérieur, plastifiée, et le cas échéant sous pression,

   c) un piston (60) de commande est installé de façon à se déplacer librement dans le corps (30) de valve dans le prolongement axial de l'aiguille (40) de valve, qui ferme un volume de travail (34) en réalisant une fuite bien définie par rapport à un système (13) de gaz sous pression qui comprend un élément de production de gaz, sous pression, et un élément formant réservoir (13a, 13b, 13c), un élément (19, 20) d'alimentation en gaz de la tête (11) de la machine (10a) à mouler par injection et/ou de l'outil (16), ainsi qu'une bulle de gaz (17) injectée dans l'outil (16) partiellement rempli, le diamètre du piston (60) de commande étant plus grand que le diamètre de l'aiguille (40) de valve, à l'extrémité axiale de laquelle la pression de gaz du système (13) de gaz sous pression agit, dans la phase d'injection de gaz dans le sens de l'ouverture, à l'encontre de la pression de la masse de matière plastique plastifiée et de la précontrainte du ressort, et le piston de commande (60) agissant, lors du retrait du gaz de la bulle de gaz (17) dans le système (13) de gaz sous pression, sur l'extrémité axiale de l'aiguille (40) de valve dans le sens de l'ouverture, à l'encontre de la pression de la bulle de gaz (17) injectée dans l'outil (16) et de la précontrainte du ressort.

2. Procédé de commande d'une installation de transformation de matière plastique munie d'une valve d'obturation de gaz selon la revendication 1, qui comprend une machine (10a) de moulage par injection de matière plastique, un outil (16) d'injection et un système (13) de gaz sous pression pour gaz inerte, le système (13) de gaz sous pression étant relié à la valve (18) d'obturation de circuit de gaz qui est incorporée dans une tête doseuse (11) de la machine (10a) de moulage par injection de matière plastique, ou dans l'outil (16) d'injection et débouche directement dans l'espace creux de moulage (16a) de l'outil (16) de moulage par injection, ou indirectement (par l'intermédiaire de la tête doseuse) dans un canal d'arrivée (16b) de l'outil d'injection(16),

   procédé dans lequel, en mettant le siège de la valve (18) d'obturation de circuit de gaz en position d'ouverture, on provoque l'injection du gaz sous pression dans l'espace creux (16) de moulage partiellement rempli de matière plastique plastifiée, en formant une bulle de gaz (17) qui soumet la matière plastique introduite à une compression exercée de tous les côtés contre les parois de l'espace creux de moulage (16), et en mettant le siège de valve de la valve (18) d'obturation de circuit de gaz, en position de fermeture, on maintient le gaz sous pression dans l'espace creux de moulage (16) jusqu'à ce que la matière plastique se soit suffisamment solidifiée sur les parois de l'espace creux de moulage (16) pour ne plus s'écouler et

   en mettant à nouveau le siège de la valve (18) d'obturation de circuit de gaz en position d'ouverture, on fait revenir dans le système (13) de gaz sous pression le gaz comprimé qui a été injecté,

   procédé caractérisé en ce que le volume de travail (34) du corps (30) de valve communiquant avec le système ou circuit (13) de gaz sous pression et agissant sur le piston (60) de commande, mobile librement, de la valve (18) d'obturation de circuit de gaz, est purgé en un temps défini après l'achèvement du retrait du gaz, pour ramener plus vite le piston (60) de commande et l'aiguille (40) de valve, commandée par le piston (60) de commande, à leur position de départ, dans laquelle le siège de la valve (18) d'obturation de circuit de gaz est en position de fermeture.

3. Procédé selon la revendication 2, caractérisé en ce que, après la purge du volume de travail (34), l'ouverture de l'objet moulé entourant la bulle de gaz (17° est fermée par introduction d'une quantité déterminée de masse de matière plastique plastifiée ("Scellage par apport de matière").

FIG. 1

FIG.2

FIG.3

EP 0 390 068 B1